Europäisches Patentamt

European Patent Office

Office européen des brevets

(19)

(11) **EP 0 641 824 B1**

(12) **EUROPEAN PATENT SPECIFICATION**

(45) Date of publication and mention
of the grant of the patent:
**01.12.1999   Bulletin 1999/48**

(51) Int Cl.[6]: **C08K 5/54**, C08L 21/00,
B60C 1/00

(21) Application number: **94306382.6**

(22) Date of filing: **31.08.1994**

(54) **Rubber composition for tyre treads**

Gummimischungen für Reifenlaufflächen

Compositions de caoutchouc pour bandes de roulement de pneus

(84) Designated Contracting States:
**DE FR GB**

(30) Priority:  **01.09.1993   JP 21767393**

(43) Date of publication of application:
**08.03.1995   Bulletin 1995/10**

(73) Proprietor: **Sumitomo Rubber Industries Ltd.
Kobe-shi, Hyogo 651 (JP)**

(72) Inventors:
• **Fukumoto, Takahiro
   Suma-ku, Kobe-shi, Hyogo-ken (JP)**
• **Nakada, Yoko
   Kobe-shi, Hyogo-ken (JP)**
• **Muraoka, Kiyoshige
   Kobe-shi, Hyogo-ken (JP)**
• **Terakawa, Katsumi
   Kobe-shi, Hyogo-ken (JP)**

(74) Representative: **Stewart, Charles Geoffrey
Dunlop Tyres Ltd
Fort Dunlop, Erdington,
Birmingham B24 9QT (GB)**

(56) References cited:
**EP-A- 0 447 066          EP-A- 0 519 188
EP-A- 0 632 093          DE-A- 3 813 678
US-A- 4 522 970**

• **CHEMICAL ABSTRACTS, vol. 119, no. 12, 20
September 1993, Columbus, Ohio, US; abstract
no. 119294, K.SATO ET AL. 'RUBBER
COMPOSITIONS' & JP-A-5 051 484
(BRIDGESTONE CORP) 2 March 1992**

## Description

The present invention relates to a rubber composition suitable for use in tyre treads, and more particularly to a rubber composition for tyre treads having improved grip characteristics on icy roads.

The use of spiked tyres is in some countries such as Japan legally prohibited in order to prevent dust pollution from spiked tyres. Thus in cold districts studless tyres need to be used instead of spiked tyres. As a result of improvements, studless tyres having grip characteristics close to those of spiked tyres have been developed and are now used practically.

Hysteresis friction, adhesive friction and digging friction are known as factors controlling the friction between a tread rubber and a road which exerts an influence upon the grip characteristics of studless tyres. On a road having a very low coefficient of friction such as an icy road, the friction due to hysteresis loss in very small, thus a large portion of the friction results from adhesive friction and digging friction.

The tread pattern and surface conditions of tread rubber are important to raise the digging frictional force. Spiked tyres produce a large digging frictional force. Attempts to raise the digging frictional force are made also in studless tyres, for example, by using an expanded rubber or incorporating an organic fibre into the tread rubber so as to increase the unevenness of the tread surface, and an effect has been achieved. The unevenness of the tread surface also has the effect of removing a water film formed between the tread surface and an icy road, thus raising the adhesive frictional force. However, this rise of the adhesive frictional force is an indirect result based on increasing the actual contact area and, therefore, there is a limit in raising the adhesive frictional force since there is a limit in increasing the actual contact area.

The rubber itself exerts an influence upon increase of adhesive frictional force. Accordingly, it is also an affective manner, for example, to use a soft rubber compound so as to increase the contact area with the road. For this purpose, it has been practised to decrease the amount of filler, or to use butadiene rubber or isoprene rubber which does not harden even at low temperatures, or to add a softener to the rubber compound. However, satisfactory results are not obtained, since it is not possible to soften the tread rubber to an extreme from the viewpoints of handling stability and abrasion resistance.

Presently used studless tyres exhibit good characteristics on a snow covered road which bear comparison with spiked tyres, but may be inferior in grip characteristics on icy roads to spiked tyres depending on conditions of the road and weather conditions such as temperature. Thus, further improvement in grip characteristics has been demanded.

It is an object of the present invention to provide a rubber composition suitable for use in tyre treads, particularly treads of studless tyres, capable of exhibiting excellent grip characteristics even on an icy road.

The above and other objects of the present invention will become apparent from the description hereinafter.

In general, with respect to the friction between ice and a tyre, ice in the vicinity of 0°C is the most slippery, and this is thought to be due to the lubricating effect of a water film produced by friction at the time of starting or braking an automobile. In order to raise the adhesive frictional force, it is necessary to increase the contact area between the tread rubber and the ice by removing the water film.

In a conventional technique, a design to increase the unevenness of the tyre tread surface has been made. This means is effective in raising the adhesive frictional force by removal of water film and in raising the digging frictional force. However, increasing of the actual contact area by providing the tread surface with an unevenness has a limit.

Thus, the present inventors have thought of increasing the difficulty for water to stick or attach itself to the tyre surface and improving the case of water release or separation from the tyre, surface, to achieve an improvement in the adhesive frictional force, by further increasing the water repellency of the surface of the rubber compound which is in general hydrophobic or water repellent.

It has been found that incorporation of a silylating agent into a rubber composition is very effective for increasing the adhesive frictional force. The silylating agent easily reacts with compounds having an active hydrogen, such as OH group, NHR group, COOH group, CONH group or SH group, present in the rubber composition to convert the compounds into hydrophobic. Thus, a hydrophilic portion in a tread rubber composition is changed to hydrophobic to impart a water repellency to the tread rubber itself, whereby sticking of the water film present between ice and the tread rubber can be controlled and water droplets sticking onto the tread rubber surface can be easily removed. As a result, the actual contact area between the tread rubber and ice can be increased to increase the adhesive frictional force.

In accordance with the present invention, there is provided a rubber composition for a tyre tread comprising a rubber component, characterised by containing 30 to 80 parts of a carbon black and 2 to 15 parts of a silylating agent excepting a silane compound having a sulphide component and a bis(trimethylsilyl)amine, said parts all being parts by weight per 100 parts by weight of said rubber component.

The silylating agent serves to impart an improved adhesive frictional force to tyre treads, thus improving the grip characteristics of tyres. A hydrophilic portion having an active hydrogen group in the tread rubber composition is made hydrophobic so as to impart a water repellency to the tread rubber by incorporation of the silylating agent into the composition, whereby sticking of a water film or water onto the tread rubber surface can be restrained and water droplets sticking to the tread rubber surface can be easily removed. Thus, the actual contact area between the tread rubber and ice is increased to increase the adhesive frictional force.

The rubber composition of the present invention is suitable for use in tyre treads and provides studless tyres having improved grip characteristics and good acceleration and braking characteristics on icy roads.

Rubbers which show a small increase in hardness at low temperatures, e.g. natural rubber, isoprene rubber and butadiene rubber, are preferably used as the rubber component for the rubber composition according to the present invention in order to make the actual contact area with icy road large to thereby raise the adhesive frictional force of tyres. These rubbers may be used alone or in admixture thereof. The rubber component may contain a minor amount of other rubbers.

In order to obtain the desired hardness, carbon black is incorporated into the rubber composition in an amount of 30 to 80 parts by weight, preferably 40 to 60 parts by weight, more preferably 40 to 50 parts by weight, per 100 parts by weight of the rubber component. If the amount of carbon black is less than 30 parts by weight, the abrasion resistance and the cracking resistance tend to decrease. If the amount of carbon black is more than 80 parts by weight, the resultant rubber tends to harden during use owing to heat generation.

Known silylating agents which have been used in silylation of organic or inorganic compounds, in other words, organic silicon compounds which are capable of introducing a silyl group into organic or inorganic compounds having active hydrogen by reaction with the active hydrogen, can be used in the present invention.

The silylating agent may include, for instance, a chlorosilane compound, especially a chlorosilane compound of the formula $R^1_{4-n}SiCl_n R^1$ wherein $R^1$ is an alkyl group or phenyl group and n is 1, 2 or 3, an alkoxysilane, especially an alkoxysilane of the formula: $(R^20)_m-Si-R^3_{(4-m)}$ wherein $R^1$ is an alkyl group, $R^1$ is an alkyl group or phenyl group and m is 1, 2 or 3; and a disilazane compound, especially a hexaalkyl dislazane compound. Representative examples of the silylating agent are, for instance, a chlorosilane compound such as, tert-butyldimethylchlorosilane, phenyltrichlorosilane or diphenyldichlorosilane, preferably a di or trichlorosilane compound, an alkoxysilane compound, preferably a di or trialkoxysilane such as phenyltriethoxysilane, isobutyltrimethoxysilane or diphenydimethoxysilane; and a silazane compound such as hexamethyldisilazane. Other silylating agents such as N,0-bis (trimethylsilyl) acetamide and N,N' bis (trimethylsilyl) urea are also applicable to the present invention. The silylating agents may be used alone or in admixture thereof.

The silylating agent is used in an amount of 2 to 15 parts by weight, preferably 3 to 8 parts by weight, per 100 parts by weight of the rubber component. If the amount of the silylating agent is less than 2 parts by weight, the effect of the silylating agent is scarcely exhibited. If the amount is more than 15 parts by weight, the unreacted silylating agent bleeds onto the rubber surface to decrease the sliding resistance, thus it rather tends to lower the characteristics on icy road.

The tyre tread rubber composition according to the present invention can provide a tread rubber having a contact angle to water increased by at least 5% especially at least 8% as compared with a rubber composition containing no silylating agent, namely the same rubber composition excepting no inclusion of a silylating agent.

In order to raise the draining effect or scratching effect of tyres, an organic fibre can be incorporated into the rubber composition of the present invention, or an expanded rubber can be used as the rubber component of the composition.

The rubber composition of the present invention may contain additives for rubbers usually employed in the production of tyres, for example, antioxidant, softener, activator, such as zinc oxide or stearic acid, curing accelerator, curing agent such as sulphur, and the like.

The rubber composition of the present invention is prepared in a usual manner using rubber component, carbon black, silylating agent and additives. Usually, the ingredients other than the curing agent such as sulphur and curing accelerator, are premixed at an elevated temperature to give a first stock, and the curing agent and the curing accelerator are then added to the first stock and are further mixed to give a final stock. The pre-mixing is carried out preferably at a temperature of 130° to 170°, since reaction of the silylating agent does not sufficiently proceed at a temperature below 130°C, and since the rubber tends to deteriorate at a temperature above 170°C. The pre-mixing time is usually from 1 to 10 minutes.

In the case of using an antioxidant, it is usually added to rubber mix after the pre-mixing, since the antioxidant may impair the reaction of the silylating agent. An antioxidant having a low reactivity may be added at the time of pre-mixing, and the addition at the time of pre-mixing is preferred from the viewpoint of dispersion.

The rubber composition of the present invention can be cured in the usual manner at a temperature of 120° to 180°C.

The rubber composition of the present invention is suitable for use in the treads of studless tyres for passenger cars, trucks and buses.

The present invention is more specifically described and explained by means of the following examples wherein all parts are by weight. It is to be understood that the present invention is not limited to the examples.

Example 1.

Rubber compositions were prepared according to the recipes shown in Table 1 by mixing the ingredients other than sulphur, accelerator and antioxidant at 150° ±°C, adding the rest to the mixture and then mixing at 110° ± 10°C.

Table 1

| Recipe No. | | A | B | C | D | E | F | G | H | I |
|---|---|---|---|---|---|---|---|---|---|---|
| Natural rubber | | 70 | 70 | 70 | 70 | 70 | 70 | 70 | 70 | 70 |
| Butadiene rubber | | 30 | 30 | 30 | 30 | 30 | 30 | 30 | 30 | 30 |
| Carbon black*1 | | 50 | 50 | 50 | 30 | 50 | 50 | 90 | 50 | 50 |
| Silylating agent: | KBE-103*2 | 2 | 5 | 10 | 5 | 0 | 20 | 5 | – | – |
| | KA-103*3 | – | – | – | – | – | – | – | 5 | – |
| | HMDS*4 | – | – | – | – | – | – | – | – | 5 |
| Process oil*5 | | – | – | – | – | – | – | 10 | – | – |
| Stearic acid | | 2 | 2 | 2 | 2 | 2 | 2 | 2 | 2 | 2 |
| Zinc oxide | | 4 | 4 | 4 | 4 | 4 | 4 | 4 | 4 | 4 |
| Antioxidant*6 | | 1 | 1 | 1 | 1 | 1 | 1 | 1 | 1 | 1 |
| Sulfur | | 1.5 | 1.5 | 1.5 | 1.5 | 1.5 | 1.5 | 1.5 | 1.5 | 1.5 |
| Curing accelerator*7 | | 0.5 | 0.5 | 0.5 | 0.5 | 0.5 | 0.5 | 0.5 | 0.5 | 0.5 |

(Notes)　*1　N220 made by Showa Cabot Kabushiki Kaisha

*2　Phenyltriethoxysilane (KBE-103 made by Shin-Etsu Chemical Co., Ltd.)

*3　Phenyltrichlorosilane (KA-103 made by Shin-Etsu Chemical Co., Ltd.)

*4　Hexamethyldisilazane made by Shin-Etsu Chemical Co., Ltd.

*5　Parafin oil commercially available under the trade mark "Diana Process" PS 32 from Idemitsu Kosan Co., Ltd.

*6　N-Phenyl-N'-(1,3-dimethylbutyl)-p-phenylenediamine commercially available under the trade mark "Nocrac" 6C from Ouchi Shinko Kagaku Kabushiki Kaisha

*7　N-tert-Butyl-2-benzothiazylsulfenamide commercially available under the trade mark "Nocceler" NS from Ouchi Shinko Kagaku Kabushiki Kaisha

Example 2.

Studless tyres 165R13 were prepared using the tread rubber compositions A to I obtained in Example 1.

The internal pressure of the tyres were adjusted to 2 Kgf/cm². The tyres were attached to a 1500 cc FF car having an anti-lock braking system, and the acceleration time and the braking distance were measured on an ice-covered road under the conditions as follows:

Place: Nayoro test course of Sumitomo Rubber Industries Ltd.
Air temperature: -5°C.
Ice temperature: -2°C.

Acceleration time

The car was accelerated from the stopped state, and the time required for running 50m was measured.

The result was represented as an index of the result of the tyre prepared from standard rubber composition E regarded as 100. The smaller the index, the better.

Braking distance.

The car was run at 30 Km/hour and braked, and the distance required for stopping the car was measured.

The result was represented as an index to the result of the tyre prepared from standard rubber composition E regarded as 100. The smaller the index, the better.

Contact angle of water on rubber surface.

The advancing contact angle and the receding contact angle were measured by a contact angle measuring device with gradually feeding or sucking water through a glass capillary so as to make a water droplet on a sample large or small gradually. The advancing contact angle means a contact angle measured when the water droplet is gradually made larger, and the receding contact angle means a contact angle measured when the water droplet is gradually made smaller. The contact angle was calculated according to the following equation.

$$\cos \theta = \frac{1}{2}(\cos \theta_a + \cos \theta_r)$$

wherein θ is the contact angle, θ a is the advancing contact angle and θ r is the receding contact angle.

The result was represented as an index to the result of the tyre prepared from standard rubber composition E regarded as 100.

It is preferable that the index of the contact angle is at least 108, especially at least 113.

The degree of water repellency can be quantitatively represented by measuring the contact angle between water and rubber. The larger the contact angle, the higher the water repellency of the rubber.

The contact angle should be measured by using a number of samples and a number of measurements such that a difference of the unit of the average can be detected with 5% significance level.

The results are shown in Table 2.

In example 2-2a, the rubber composition was prepared in the same manner as in example 1 except that the antioxidant was added to the rubber component in the stage of pre-mixing conducted at a temperature of 1500 ± 5°C.

## Table 2

| Example No. | 2-1 | 2-2 | 2-2a | 2-3 | 2-4 | 2-5 | 2-6 | 2-7 | 2-8 | 2-9 |
|---|---|---|---|---|---|---|---|---|---|---|
| Recipe No. of composition used | A | B | B | C | D | E | F | G | H | I |
| Acceleration time (index) | 98 | 96 | 97 | 93 | 97 | 100 | 103 | 108 | 98 | 95 |
| Braking distance (index) | 98 | 95 | 99 | 93 | 96 | 100 | 101 | 106 | 97 | 97 |
| Contact angle (index) | 108 | 115 | 113 | 118 | 113 | 100 | 121 | 113 | 108 | 110 |

EP 0 641 824 B1

It can be seen from the results shown in Table 2 that the tyres having a tread prepared from the rubber compositions A, B, C, D, H and I according to the present invention have improved grip characteristics on an icy road as compared with the tyre of example No. 2-5 prepared from the rubber composition E which does not contain a silylating agent. The tyre of example No. 2-6 did not show good results, since the amount of silylating agent used was excessive. The tyre of example No. 2-7 also did not show good results, since the amount of carbon black used was excessive.

In addition to the ingredients used in the examples, other ingredients can be used in the examples as set forth in the specification to obtain substantially the same results.

## Claims

1. A rubber composition for a tyre tread comprising a rubber component, characterised by containing 30 to 80 parts of a carbon black and 2 to 15 parts of a silylating agent excepting a silane compound having a sulphide component and bis(trimethylsilyl)amine, said parts all being parts by weight per 100 parts by weight of said rubber component.

2. The composition of Claim 1, characterised in that said silylating agent is at least one member selected from the group consisting of a chlorosilane, an alkoxysilane and a silazane.

3. The composition of Claim 1 or 2, characterised in that said rubber composition has a contact angle to water larger than the same rubber composition without inclusion of the silylating agent by at least 5%.

4. The composition of Claims 1, 2 or 3, characterised in that said silylating agent is at least one member selected from the group consisting of a chlorosilane of the formula: $R^1{}_{4-n}SiCl_n$ wherein $R^1$ is an alkyl group or phenyl group and n is 1, 2 or 3; an alkoxysilane of the formula:$(R^2O)_m$-Si-$R^3{}_{(4-m)}$ wherein $R^2$ is an alkyl group, $R^3$ is an alkyl group or phenyl group and m is 1, 2 or 3; and a hexaalkyl disilazane compound.

5. The composition of any Claims 1 to 4 characterised in that said rubber component is at least one member selected from the group consisting of natural rubber, isoprene rubber and butadiene rubber.

6. An automobile tyre having a tread characterised in that the tread is prepared from the rubber composition of Claim 1.

## Patentansprüche

1. Kautschukmischung für einen Reifenlaufstreifen, die einen Kautschukbestandteil umfaßt, dadurch gekennzeichnet, daß er 30 bis 80 Teile eines Rußes und 2 bis 15 Teile eines Silylierungsmittels, ausgenommen eine Silanverbindung mit einem Sulfidbestandteil und ein Bis(trimethylsilyl)amin, enthält, wobei alle Teile Gewichtsteile sind, die auf 100 Gewichtsteile des Kautschukbestandteils bezogen sind.

2. Mischung nach Anspruch 1, dadurch gekennzeichnet, daß das Silylierungsmittel mindestens ein Stoff ist, der aus der Gruppe ausgewählt ist, die aus einem Chlorsilan, einem Alkoxysilan und einem Silazan besteht.

3. Mischung nach Anspruch 1 oder 2, dadurch gekennzeichnet, daß die Kautschukmischung einen Kontaktwinkel mit Wasser aufweist, der um mindestens 5% größer als derjenige der gleichen Kautschukmischung ohne den Einschluß des Silylierungsmittels ist.

4. Mischung nach einem der Ansprüche 1, 2 oder 3, dadurch gekennzeichnet, daß das Silylierungsmittel mindestens ein Stoff ist, der aus der Gruppe ausgewählt ist, die aus einem Chlorsilan mit der Formel: $R^1{}_{4-n}SiCl_n$, wobei $R^1$ eine Alkylgruppe oder Phenylgruppe ist und n 1, 2 oder 3 ist; einem Alkoxysilan mit der Formel: $(R^2O)_m$-Si-$R^3{}_{(4-m)}$, wobei $R^2$ eine Alkylgruppe ist, $R^3$ eine Alkylgruppe oder Phenylgruppe ist und m 1, 2 oder 3 ist; und einer Hexaalkyldisilazanverbindung besteht.

5. Mischung nach einem der Ansprüche 1 bis 4, dadurch gekennzeichnet, daß der Kautschukbestandteil mindestens ein Stoff ist, der aus der Gruppe ausgewählt ist, die aus Naturkautschuk, Isoprenkautschuk und Butadienkautschuk besteht.

6. Kraftfahrzeugreifen mit einem Laufstreifen, dadurch gekennzeichnet, daß der Laufstreifen aus der Kautschukmischung von Anspruch 1 hergestellt ist.

**Revendications**

1. Composition de caoutchouc pour bande de roulement de pneumatique contenant un ingrédient de caoutchouc, caractérisée en ce qu'elle contient 30 à 80 parties de noir de carbone et 2 à 15 parties d'un agent de silylation, à l'exception d'un composé de silane ayant un ingrédient sulfure et de bis(triméthylsilyl)amine, toutes les parties étant des parties en poids pour 100 parties en poids de l'ingrédient de caoutchouc.

2. Composition selon la revendication 1, caractérisée en ce que l'agent de silylation est au moins un composé choisi dans le groupe constitué par un chlorosilane, un alcoxysilane et un silazane.

3. Composition selon la revendication 1 ou 2, caractérisée en ce que la composition de caoutchouc a un angle de contact vis-à-vis de l'eau supérieur à celui d'une composition de caoutchouc identique, mais dépourvue de l'agent de silylation, d'une quantité d'au moins 5 %.

4. Composition selon la revendication 1, 2 ou 3, caractérisée en ce que l'agent de silylation est au moins un composé choisi dans le groupe constitué par un chlorosilane de formule $R^1_{4-n}SiCl_n$, $R^1$ étant un groupe alkyle ou phényle et n étant égal à 1, 2 ou 3, un alcoxysilane de formule $(R^2O)_m\text{-}Si\text{-}R^3_{(4-m)}$, $R^2$ étant un groupe alkyle, $R^3$ étant un groupe alkyle ou phényle et m étant égal à 1, 2 ou 3, et un composé d'hexaalkyldisilazane.

5. Composition selon l'une quelconque des revendications 1 à 4, caractérisée en ce que l'ingrédient de caoutchouc est au moins un composé choisi dans le groupe constitué par du caoutchouc naturel, du caoutchouc d'isoprène et du caoutchouc de butadiène.

6. Pneumatique d'automobile ayant une bande de roulement, caractérisé en ce que la bande de roulement est préparée à partir de la composition de caoutchouc selon la revendication 1.